# FASCICULE DE BREVET EUROPEEN

(11) **EP 2 406 792 B1**
(45) Date de publication et mention de la délivrance du brevet: **19.12.2012**
(21) Numéro de dépôt: 10708274.5
(22) Date de dépôt: 04.02.2010
(51) Int. Cl.: G21F 9/30, G21F 9/32, B01D 53/14, B01D 53/78, B01D 59/00, B01D 53/04, B01D 59/26

(54) **TRAITEMENT DE DECHETS RADIOACTIFS CARBONES**
BEHANDLUNG VON KOHLENSTOFFHALTIGEM RADIOAKTIVEM ABFALL
TREATMENT OF CARBON-CONTAINING RADIOACTIVE WASTE

(30) Priorité: 11.03.2009 FR 0951517; 07.05.2009 US 437195
(43) Date de publication de la demande: 18.01.2012
(73) Titulaire: Electricité de France, 75008 Paris (FR)
(72) Inventeur: LAURENT, Gérard, F-69100 Villeurbanne (FR)
(74) Mandataire: Cabinet Plasseraud
(86) Numéro de dépôt international: PCT/FR2010/050174
(87) Numéro de publication internationale: WO 2010/103210

(56) Documents cités:
- WO-A-01/27935
- WO-A-02/21538
- JP-A- 2000 070 678
- US-A- 5 745 861

## Description

L'invention concerne le traitement de déchets radioactifs carbonés, tels que par exemple les structures de graphite (« chemises » entourant les assemblages combustibles nucléaires, ou « briques » servant de réflecteur ou de modérateur) ou encore les résines organiques (souvent sous forme de billes ou de pastilles) utilisées pour piéger d'autres déchets radioactifs notamment dans des réacteurs de centrales nucléaires.

Dans ces déchets carbonés, il est recherché l'isolation et le stockage confiné des radionucléides volatils, tels le tritium (³H), le chlore 36 (³⁶Cl) et notamment les isotopes du carbone, en particulier l'isotope radioactif ¹⁴C (nommé « carbone 14 » ci-après).

Il est alors prévu deux types de traitement de ces déchets carbonés :
- un premier type de traitement pour obtenir un oxyde de carbone, par exemple du monoxyde et/ou du dioxyde de carbone dont l'élément carbone est l'isotope carbone 14, et
- un deuxième type de traitement de cet oxyde de carbone pour obtenir un précipité solide par réaction avec un élément choisi tel que, par exemple, du calcium.

Ce deuxième type de traitement, appelé alors « carbonatation », consiste par exemple à faire buller l'oxyde de carbone dans une solution contenant de la chaux vive (quand l'élément choisi est du calcium) et le précipité solide obtenu (typiquement de la calcite CaCO₃ dont l'élément carbone est l'isotope ¹⁴C) peut être confiné et stocké durablement en masse dans des conteneurs stockés en surface ou enterrés sous une certaine épaisseur de terre, par exemple sous une colline. On indique ici qu'une variante consiste à faire réagir l'oxyde de carbone avec un autre élément que le calcium, tel que du magnésium (ou d'autres métaux), pour obtenir de la magnésite MecO3. On retiendra donc que ce deuxième type de traitement vise à obtenir de façon générale un précipité solide insoluble, de carbonates et/ou de sels comportant l'élément carbone.

Habituellement, le deuxième type de traitement est appliqué à tout l'oxyde de carbone résultant du premier traitement. On obtient ainsi un précipité solide issu de tout l'oxyde de carbone résultant du traitement des déchets.

Cette solution est peu satisfaisante au moins pour deux raisons. D'une part, le conditionnement, le stockage et l'enterrement du précipité solide (calcite ou autre) est très coûteux. D'autre part, il est recherché, pour le respect de l'environnement, d'avoir à stocker le moins de déchets possibles (surtout si ceux-ci sont destructibles ou traitables).

La présente invention vient alors améliorer la situation.

A cet effet, elle propose tout d'abord un procédé comportant :
- une première phase pendant laquelle on applique à la fois le premier et le deuxième type de traitement, et
- une deuxième phase pendant laquelle on applique seulement le premier type de traitement.

En effet, il a été observé que l'isotope radioactif ¹⁴C, probablement du fait de la nature de ses liaisons atomiques à propriétés différentes de celles du carbone non radioactif ¹²C et éventuellement de celles de l'autre isotope ¹³C (peu ou pas nocif), a une tendance à réagir plus rapidement que les autres isotopes du carbone pendant l'application du premier type de traitement.

Une explication de cet effet est donnée ci-après. En réacteur, dans un flux de neutrons thermiques, deux réactions sont à l'origine de l'isotope ¹⁴C :
- une première réaction ¹³C(n,γ) : ¹⁴C et
- une deuxième réaction ¹⁴N(n,p) : ¹⁴C.

La première réaction est prépondérante par rapport à la deuxième, dans la mesure où le carbone constitue majoritairement la matrice graphite alors que l'azote est principalement contenu dans les pores du graphite.

Des calculs ont montré que les énergies de recul de l'isotope ¹⁴C, issu des deux types de réactions, sont suffisantes pour briser les liaisons chimiques dans des plans graphènes de la structure du graphite. En effet, les énergies de liaison sont en général supérieures à 1 keV (pour l'isotope ¹⁴C issu de l'isotope ¹³C) et de l'ordre de 40 keV (pour l'isotope ¹⁴C issu de l'isotope ¹⁴N). Il existe donc une forte probabilité pour que la liaison C-C dans les plans graphènes, dont l'énergie est de l'ordre de 280 eV, soit rompue pour les atomes de l'isotope ¹⁴C et que ces atomes soient déplacés de leur site structural. En réacteur, ces atomes sont susceptibles de reformer des liaisons avec des atomes de carbone ou avec des impuretés du graphite, mais les températures de fonctionnement du réacteur ne sont pas alors suffisantes pour reconstituer les plans graphènes.

Ainsi, l'isotope ¹⁴C a tendance à être relâché de façon préférentielle à l'isotope ¹²C, lors des premier et/ou deuxième traitements précités.

En d'autres termes, dans les premiers temps du traitement par oxydation des déchets, il se dégage d'abord essentiellement de l'oxyde de carbone dont l'élément carbone est plus chargé en isotope radioactif ¹⁴C ; il vient ensuite de l'oxyde de carbone dont l'élément carbone n'est peu ou pas radioactif car composé principalement de ¹²C. On comprendra alors que cet oxyde de carbone non radioactif peut être rejeté directement dans l'atmosphère, sans avoir à être traité pour obtenir un précipité solide.

En termes plus génériques, dans le procédé de l'invention où les déchets carbonés comportent initialement du carbone 14, le précipité solide obtenu à l'issue de la première phase comporte essentiellement du carbone 14, tandis que l'oxyde de carbone issu de la deuxième phase ne comporte pas de carbone 14 ou n'en comporte qu'en quantité résiduelle, et est donc acceptable pour un rejet direct. L'oxyde de carbone issu de la deuxième phase peut alors être évacué librement dans l'atmosphère (ou peut être conformé par exemple en étant oxydé jusqu'à obtenir du dioxyde de carbone pour éviter de rejeter du monoxyde de carbone dans l'atmosphère).

L'instant propice pour basculer de la première phase à la deuxième phase et rejeter alors l'oxyde de carbone dans l'atmosphère peut être déterminé comme suit :
- on mesure une quantité de radioactivité dans l'oxyde de carbone obtenu suite à l'application du premier type de traitement dans la première phase, et
- on décide d'appliquer la deuxième phase si la quantité de radioactivité est inférieure à un seuil choisi.

Toutefois, pour mener à bien une telle réalisation, il convient de s'assurer que seul l'oxyde de carbone est susceptible d'être radioactif dans la première phase de traitement. Or, les déchets à traiter peuvent comporter d'autres éléments que du carbone, ces éléments non carbonés et volatils étant radioactifs, tels que, par exemple, du tritium (³H) ou l'isotope 36 du chlore (³⁶Cl), ou autres. Dans une configuration habituelle, mais avantageuse dans le contexte de l'invention, les déchets sont broyés et acheminés par voie humide et les éléments radioactifs non carbonés sont confinés et traités dans la voie humide, tandis que l'oxyde de carbone est extrait de la voie humide sous forme volatile. Il est avantageux alors d'avoir recours à un analyseur de radioactivité disposé judicieusement. En l'espèce, la quantité de radioactivité dans l'oxyde de carbone est mesurée avantageusement par un tel analyseur, disposé hors de la voie humide. Cet analyseur peut mesurer typiquement l'activité β sur le carbone 14 que comportent éventuellement les émanations d'oxyde de carbone issues du premier type de traitement.

On indique ici que le « premier type de traitement » précité vise à dégrader les déchets pour obtenir un oxyde de carbone, typiquement du monoxyde CO ou du dioxyde CO₂. On connaît actuellement, dans le domaine du traitement des déchets radioactifs, plusieurs façons d'obtenir un oxyde de carbone :
- par reformage à la vapeur (ou « steam reforming » en vocable anglo-saxon), comme décrit notamment dans le document US-2002/064251,
- ou encore par chauffage en gaz inerte (ou « roasting »).

Le reformage à la vapeur est un traitement à base de vapeur d'eau surchauffée, selon une réaction du type C + H₂O → CO + H₂, qui a lieu préférentiellement à une température supérieure ou de l'ordre de 900°C, et préférentiellement dans le contexte de l'invention à 1200°C ou plus, comme on le verra plus loin.

Le chauffage en gaz inerte (par exemple en azote N₂), s'effectue aussi préférentiellement à une température supérieure ou de l'ordre de 900°C, et préférentiellement dans le contexte de l'invention à 1200°C ou plus, selon une réaction du type C + ½ O₂ → CO et/ou C + O₂ → CO₂ et/ou la même réaction que précédemment C + H₂O → CO + H₂ avec de l'eau issue de la voie humide (en milieu aqueux).

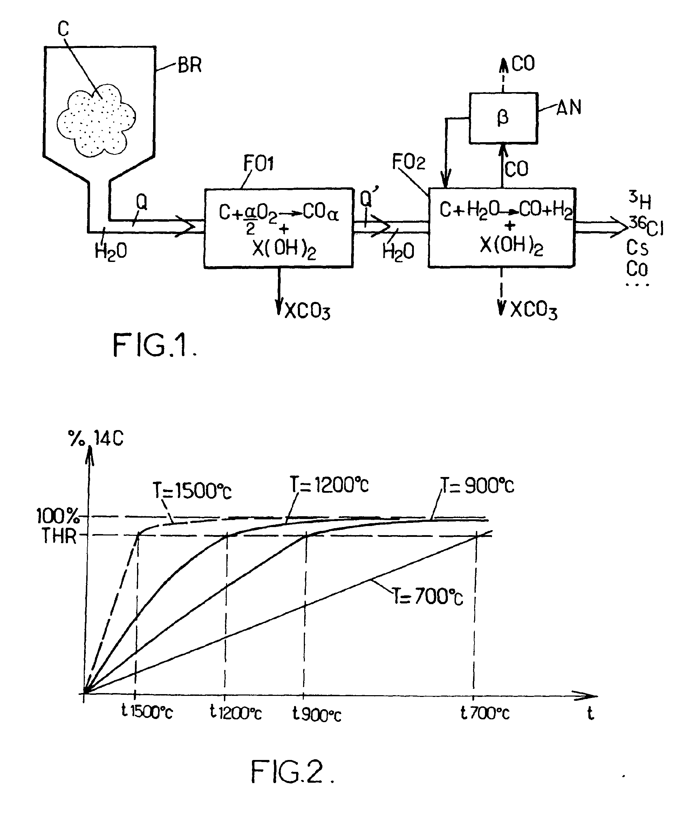

Dans le contexte de l'invention, on recherche en particulier à mettre en oeuvre ces réactions à une température supérieure à 900°C (qui est la température utilisée habituellement pour ces réactions) car il a été observé, comme décrit en détails plus loin en référence à la figure 2, que l'effet selon lequel le carbone 14 réagit avant le carbone non radioactif ¹²C pour former l'oxyde CO ou CO₂ s'est avéré d'autant plus marqué que la température de réaction (ou plus généralement des déchets carbonés) était élevée. On utilise alors préférentiellement des fours capables de dépasser cette température de 900°C, dans une installation de traitement de déchets pour la mise en oeuvre du procédé au sens de l'invention.

Ainsi, en complément ou en variante de l'utilisation d'un analyseur de radioactivité sur l'oxyde de carbone généré pendant la première phase, il peut être avantageux en outre de disposer d'abaques pour déterminer, en fonction de la température des réactions d'oxydation, le moment où les émanations d'oxyde de carbone peuvent être relâchées à l'air libre. Dans une telle mise en oeuvre, on peut donc basculer de la première phase à la deuxième phase à un instant choisi en fonction d'au moins:
- une quantité initiale de déchets à traiter, et
- une température de réaction d'oxydation, lors de l'application du premier type de traitement.

Il est avantageux en outre de commencer le traitement d'oxydation du carbone par :
- le *roasting* (en appliquant une carbonatation à l'oxyde de carbone obtenu, sans relâchement à l'air libre ici), et
- de poursuivre le traitement des déchets par du *steam reforming* (en appliquant une carbonatation seulement pendant une durée choisie, avant d'évacuer librement ensuite l'oxyde de carbone restant dans l'atmosphère).

Ainsi, en termes plus génériques, le premier type de traitement comporte, dans la première phase, un chauffage en gaz inerte et, dans les première et deuxième phases, un reformage à la vapeur.

La présente invention vise aussi une installation pour le traitement de déchets radioactifs carbonés, cette installation comportant des moyens pour la mise en oeuvre du procédé au sens de l'invention. Ces moyens sont décrits en détails ci-après.

D'ailleurs, d'autres caractéristiques et avantages de l'invention apparaîtront à l'examen de la description détaillée ci-après, et des dessins annexés sur lesquels :
- la figure 1 illustre schématiquement une installation pour le traitement des déchets au sens de l'invention, et
- la figure 2 illustre différentes variations du pourcentage de carbone 14 ayant réagi sous forme d'oxyde en fonction du temps, pour différentes températures respectives de réaction.

On se réfère tout d'abord à la figure 1 sur laquelle un broyeur BR concasse du graphite (avec une granulométrie typiquement de l'ordre du centimètre), sous eau. Une quantité Q de déchets carbonés est acheminée par une voie humide (H₂O) vers un premier four, ici de *roasting,* pour une première opération d'oxydation dite « en gaz inerte », préférentiellement à une température de 1200°C. Dans le four FO1, l'opération de réaction peut être du type :

C + α/2 O₂ → CO_{α}, avec α = 1 ou 2.

On applique ensuite une réaction de carbonatation du type :

X(OH)₂ + CO₂ → XCO₃ + H₂O,

avec X= Ca, ou Mg, ou autre, par exemple par bullage dans de l'eau de chaux (auquel cas X= Ca).

On indique ici qu'une variante possible de la carbonatation consiste plutôt à appliquer une séparation isotopique du carbone, du type décrit dans le document JP-2000 070678.

Toutefois, la carbonatation est ici préférée car, en produisant de la calcite à partir d'eau de chaux (X=Ca), seulement quelques m³ de carbonate par an sont ainsi produits et peuvent être stockés durablement (par exemple enterrés sous un site choisi). A cette étape, de l'ordre de 30% du carbone 14 que comportaient les déchets de graphite est déjà traité. Par ailleurs, 80% du tritium est aussi traité à cette étape. L'étape de *roasting* peut être éventuellement renouvelée sur plusieurs cycles afin de purger le plus possible les déchets d'origine du carbone 14 décontaminable pendant cette étape de *roasting.*

Une quantité complémentaire Q' (avec Q'=αQ où α < 1) est acheminée, toujours sous voie humide H₂O, vers un second four FO2, pour la mise en oeuvre proprement dite de l'invention. On applique dans ce deuxième four FO2 une réaction de *steam reforming* qui consiste à effectuer la réaction :

C+H₂O → CO+H₂

Cette réaction est préférentiellement menée ici à 1200°C ou plus, à partir d'une injection de vapeur d'eau surchauffée. Ensuite, l'oxyde de carbone est collecté, dans une première phase, pour le faire réagir en vue d'obtenir un précipité de carbonate XCO₃ (par exemple avec de l'eau de chaux, auquel cas X = Ca). On indique que, grâce au procédé de l'invention, la quantité de carbonate, sous forme de déchets solides à enterrer sous colline, est seulement de quelques 100 m³/an et ce, par une optimisation du moment auquel on peut cesser la carbonatation pour passer à une deuxième phase où on rejette directement l'oxyde de carbone (sous forme de gaz) dans l'atmosphère.

En particulier, dans une mise en oeuvre de l'invention, un analyseur de rayonnement β, hors de la voie humide, détecte dans les émanations d'oxyde de carbone la présence du carbone 14. Si l'analyseur AN détecte du carbone 14 en-dessous d'un seuil donné THR (par exemple de l'ordre de 1%) dans les émanations d'oxyde de carbone, alors les émanations d'oxyde de carbone peuvent être rejetées directement dans l'atmosphère, et l'opération de carbonatation peut être arrêtée.

Cette mesure hors de la voie humide est avantageuse dans le sens où d'autres éléments radioactifs des déchets, à traiter, restent confinés dans la voie humide et n'en sont pas extraits à cette étape de *steam reforming.* Tel est le cas notamment du tritium ³H, et du ³⁶Cl, susceptibles d'émettre un rayonnement β mais qui restent confinés dans la voie humide, de sorte que l'analyseur AN ne détecte pas leur rayonnement et ne détecte que le rayonnement du carbone 14 dans les fumées, ce qui rend une mesure en temps réel possible de l'instant de basculement de la première phase de carbonatation vers la deuxième phase de rejet libre.

Finalement, des éléments radioactifs dans les déchets, autres que le carbone 14 (notamment le tritium, le chlore 36, le césium, le cobalt, le fer et autres métaux) sont traités, quant à eux, dans la voie humide et piégés dans celle-ci pour être récoltés finalement et stockés durablement.

En référence à la figure 2, on explique maintenant l'intérêt d'effectuer l'opération de *roasting* (avec plusieurs cycles si nécessaire) et plus particulièrement l'opération de *steam reforming* à une température élevée par rapport aux températures des procédés de l'art antérieur (lesquelles températures sont souvent voisines de 900°C, voire inférieures à 900°C).

Il a été observé par l'inventeur, pour la première fois à sa connaissance, que le carbone 14 réagissait majoritairement avant les autres isotopes du carbone, aussi bien pendant la réaction de *roasting* que de *steam reforming.* Cet effet est très vraisemblablement dû à la nature des liaisons atomiques du carbone 14, par rapport aux autres isotopes. L'effet est d'autant plus marqué que la température de réaction d'oxydation est élevée. Ainsi, en référence à la figure 2, il apparaît bien que les courbes représentant le pourcentage de carbone 14 ayant déjà réagi sont de forme sensiblement convexe (puisque le carbone 14 réagit avant les autres isotopes, majoritairement) et, surtout, la convexité des courbes est d'autant plus marquée que la température de réaction est élevée. Ainsi, plutôt que faire réagir tout l'oxyde de carbone pour produire des carbonates stockables en masse, on fixe un seuil THR au-delà duquel la quantité de carbone 14 qui risque d'être dégagée dans l'atmosphère sous forme d'oxyde de carbone gazeux est négligeable ou, au moins, tolérée par les pouvoirs publics compte tenu de son impact sanitaire et environnemental.

Ce seuil THR est beaucoup plus vite atteint si la température de réaction est élevée, comme le montre la figure 2. Ainsi, il est préféré des températures de réaction dans le four FO2 plutôt de l'ordre de 1200°C, par rapport à l'art antérieur où il était connu d'appliquer plutôt une température de 900°C. Si des fours peuvent le permettre dans le futur, une température encore supérieure, par exemple de 1500°C, serait particulièrement avantageuse. On constate, en tout état de cause, que le temps t_{21200°C} auquel peut basculer le procédé de la phase de carbonatation à la phase de rejet libre d'émanations d'oxyde de carbone est beaucoup plus court pour des températures élevées que pour des températures basses.

Il convient de noter en outre que l'allure convexe des courbes de pourcentage de carbone ayant réagi sous forme d'oxyde, en fonction du temps, s'observe aussi bien pour la réaction d'oxydation en *roasting,* qu'en *steam reforming.*

Toutefois, en principe, dans l'étape de *roasting* dans le four FO1, il n'est pas prévu un rejet libre des émanations d'oxyde de carbone. Aussi, il n'est pas prévu de basculement vers une deuxième phase de rejet libre, cette opération étant réservée au traitement par *steam reforming,* dans l'exemple décrit ici.

Bien entendu, la présente invention ne se limite pas à la forme de réalisation décrite ci-avant à titre d'exemple ; elle s'étend à d'autres variantes.

Par exemple, il n'a pas été décrit en détail comment piéger le tritium ou le chlore 36 dans le procédé décrit ci-avant en référence à la figure 1, étant entendu que l'invention concerne plutôt le traitement du carbone 14 dans les déchets carbonés. Il a été observé néanmoins que ces éléments restent piégés dans l'eau de la voie humide.

Par ailleurs, l'étape de *roasting,* en soi, peut faire intervenir une pluralité de réactions telles que C + α/2 O₂ → CO_{α}, avec α = 1 ou 2, ou aussi C + H₂O → CO + H₂, mais conduisant toutes à l'oxydation du carbone, de façon générale. L'eau (H₂O) intervenant dans la dernière réaction ci-dessus peut être issue de la voie humide (sous forme résiduelle ou non). On retiendra finalement que, contrairement à l'étape de *steam reforming* où il est volontairement injecté sur les déchets de la vapeur d'eau surchauffée, l'étape de *roasting* dégrade simplement par oxydation les déchets, et ce à haute température (voisine de 1200°C ou plus). On retiendra aussi qu'il est avantageux de mener cette étape de *roasting* en appliquant plusieurs cycles.

## Revendications

1. Procédé de traitement de déchets radioactifs carbonés, comportant :
- un premier type de traitement des déchets pour obtenir un oxyde de carbone, et
- un deuxième type de traitement pour obtenir un précipité solide de l'oxyde de carbone par réaction avec un élément choisi,
**caractérisé en ce qu'**il comporte :
- une première phase pendant laquelle on applique à la fois le premier et le deuxième type de traitement, et
- une deuxième phase pendant laquelle on applique seulement le premier type de traitement.

2. Procédé selon la revendication 1, **caractérisé en ce que** l'oxyde de carbone issu de la deuxième phase est conformé pour être évacué librement dans l'atmosphère.

3. Procédé selon l'une des revendications 1 et 2, **caractérisé en ce que** l'élément choisi est le calcium, **en ce que** le deuxième type de traitement est une carbonatation, et **en ce que** le précipité solide issu de la première phase est de la calcite, destinée à être conditionnée pour être stockée durablement.

4. Procédé selon l'une des revendications précédentes, **caractérisé en ce que** :
- on mesure une quantité de radioactivité dans l'oxyde de carbone obtenu suite à l'application du premier type de traitement dans la première phase, et
- on décide d'appliquer la deuxième phase si la quantité de radioactivité est inférieure à un seuil choisi.

5. Procédé selon la revendication 4, dans lequel les déchets comportent des éléments non carbonés radioactifs, **caractérisé en ce que** les déchets sont broyés et acheminés par voie humide et les éléments radioactifs non carbonés sont confinés et traités dans la voie humide, tandis que l'oxyde de carbone est extrait de la voie humide sous forme volatile,
et **en ce que** la quantité de radioactivité dans l'oxyde de carbone est mesurée par un analyseur disposé hors de la voie humide.

6. Procédé selon l'une des revendications précédentes, **caractérisé en ce que** le premier type de traitement comporte au moins un reformage à la vapeur.

7. Procédé selon l'une des revendications précédentes, **caractérisé en ce que** le premier type de traitement comporte, dans la première phase, un chauffage en gaz inerte.

8. Procédé selon l'une des revendications précédentes, **caractérisé en ce que** l'on choisit de basculer de la première phase à la deuxième phase à un instant choisi en fonction d'au moins:
- une quantité initiale de déchets à traiter, et
- une température de réaction d'oxydation, lors de l' application du premier type de traitement.

9. Procédé selon la revendication 8, **caractérisé en ce que** ladite température est supérieure à 900°C, et préférentiellement de l'ordre de 1200°C.

10. Procédé selon l'une des revendications précédentes, dans lequel les déchets carbonés comportent initialement du carbone 14,
**caractérisé en ce que** le précipité solide obtenu à l'issue de la première phase comporte essentiellement du carbone 14, tandis que l'oxyde de carbone issu de la deuxième phase ne comporte du carbone 14 qu'en quantité résiduelle.

11. Procédé selon l'une des revendications précédentes, **caractérisé en ce que** lesdits déchets carbonés comportent au moins du graphite et/ou des résines.

12. Installation pour le traitement de déchets radioactifs carbonés, **caractérisée en ce qu'**elle comporte des moyens pour la mise en oeuvre du procédé selon l'une des revendications précédentes.

## Claims

1. Method for treatment of carbonaceous radioactive waste, comprising:
- a first type of waste treatment to obtain a carbon oxide, and
- a second type of treatment to obtain a solid precipitate of the carbon oxide by reacting with a selected element,
**characterized in that** it comprises:
- a first phase during which both the first and the second type of treatment are applied, and
- a second phase during which only the first type of treatment is applied.

2. Method according to claim 1, **characterized in that** the carbon oxide obtained from the second phase is formed to be discharged freely into the atmosphere.

3. Method according to any of claims 1 and 2, **characterized in that** the selected element is calcium, **in that** the second type of treatment is a carbonation, and **in that** the solid precipitate from the first phase is calcite, intended to be packaged for long-term storage.

4. Method according to any of the previous claims, **characterized in that**:
- a quantity of radioactivity in the carbon oxide obtained following the application of the first type of treatment in the first phase is measured, and
- it is decided to apply the second phase if the quantity of radioactivity is less than a selected threshold.

5. Method according to claim 4, wherein the waste comprises radioactive non-carbonaceous elements,
**characterized in that** the waste is crushed and routed by means of a wet process and the non-carbonaceous radioactive elements are confined and treated in the wet process, whereas the carbon oxide is extracted from the wet process in a volatile form, and **in that** the quantity of radioactivity in the carbon oxide is measured using an analyzer arranged outside the wet process.

6. Method according to any of the previous claims, **characterized in that** the first type of treatment comprises at least one steam reforming operation.

7. Method according to any of the previous claims, **characterized in that** the first type of treatment comprises, in the first phase, a roasting in inert gas.

8. Method according to any of the previous claims, **characterized in that** it is selected to switch from the first phase to the second phase at a time selected as a function of at least:
- an initial amount of waste to be treated, and
- an oxidation reaction temperature, during the application of the first type of treatment.

9. Method according to claim 8, **characterized in that** said temperature is greater than 900°C, and preferentially of the order of 1200°C.

10. Method according to any of the previous claims, wherein the carbonaceous waste initially comprises carbon 14, **characterized in that** the solid precipitate obtained following the first phase essentially comprises carbon 14, whereas the carbon oxide obtained from the second phase only comprises a residual amount of carbon 14.

11. Method according to any of the previous claims, **characterized in that** said carbonaceous waste comprises at least graphite and/or resins.

12. Carbonaceous radioactive waste treatment facility, **characterized in that** it comprises means for the implementation of the method according to any of the previous claims.

## Patentansprüche

1. Verfahren zur Behandlung von kohlenstoffhaltigen radioaktiven Abfällen, umfassend:
- eine erste Behandlungsart von Abfällen, um Kohlenstoffmonoxid zu erhalten, und
- eine zweite Behandlungsart, um ein festes Präzipitat des Kohlenmonoxids durch Reaktion mit einem ausgewählten Element zu erhalten,
**dadurch gekennzeichnet, dass**
das Verfahren umfasst
- eine erste Phase, während der zugleich die erste und die zweite Behandlungsart angewendet werden, und
- eine zweite Phase, während der nur die erste Behandlungsart angewendet wird.

2. Verfahren nach Anspruch 1, **dadurch gekennzeichnet, dass** das Kohlenstoffmonoxid, das aus der zweiten Phase hervorgeht, umgewandelt wird, um frei in die Atmosphäre abgeführt zu werden.

3. Verfahren nach einem der Ansprüche 1 und 2, **dadurch gekennzeichnet, dass** das ausgewählte Element Calcium ist, dass die zweite Behandlungsart eine Karbonisierung ist, und dass das feste Präzipitat, das aus der ersten Phase hervorgeht, Calcit ist, der vorgesehen ist abgepackt zu werden, um dauerhaft gelagert zu werden.

4. Verfahren nach einem der vorherigen Ansprüche, **dadurch gekennzeichnet, dass**:
- eine Menge an Radioaktivität im Kohlenstoffmonoxid, das durch Anwendung der ersten Behandlungsart in der ersten Phase erhalten wird, gemessen wird, und
- die zweite Phase angewendet wird, wenn die Menge an Radioaktivität unterhalb eines ausgewählten Grenzwertes liegt.

5. Verfahren nach Anspruch 4, wobei die Abfälle nicht kohlenstoffhaltige radioaktive Elemente umfassen,
**dadurch gekennzeichnet, dass** die Abfälle gemahlen werden und auf einer Nassstrecke befördert werden und die nicht kohlenstoffhaltigen radioaktiven Elemente in der Nasstrecke gesammelt und behandelt werden, während das Kohlenstoffmonoxid in flüchtiger Form aus der Nasstrecke extrahiert wird, und dass die Menge an Radioaktivität im Kohlenstoffmonoxid durch eine Analysator gemessen wird, der außerhalb der Nasstrecke angeordnet ist.

6. Verfahren nach einem der vorherigen Ansprüche, **dadurch gekennzeichnet, dass** die erste Behandlungsart mindestens eine Dampfreformierung umfasst.

7. Verfahren nach einem der vorherigen Ansprüche, **dadurch gekennzeichnet, dass** die erste Behandlungsart in der ersten Phase ein Heizen mit Inertgas umfasst.

8. Verfahren nach einem der vorherigen Ansprüche, **dadurch gekennzeichnet, dass** entschieden wird, von der ersten Phase in die zweite Phase überzugehen zu einem Zeitpunkt, der gewählt wird in Abhängigkeit mindestens von:
- einer Ausgangsmenge der zu behandelnden Abfälle, und
- einer Temperatur der Oxidationsreaktion während der Anwendung der ersten Behandlungsart.

9. Verfahren nach Anspruch 8, **dadurch gekennzeichnet, dass** die Temperatur höher als 900°C ist, und vorzugsweise in der Größenordnung von 1200°C ist.

10. Verfahren nach einem der vorherigen Ansprüche, **dadurch gekennzeichnet, dass** die kohlenstoffhaltigen Abfälle ursprünglich Kohlenstoff-14 enthalten,
**dadurch gekennzeichnet, dass** das feste Präzipitat, das aus der ersten Phase hervorgeht, im Wesentlichen Kohlenstoff-14 enthält, während der Kohlenstoffmonoxid, das aus der zweiten Phase hervorgeht, Kohlstoff-14 nur in einer Restmenge enthält.

11. Verfahren nach einem der vorherigen Ansprüche, **dadurch gekennzeichnet, dass** die kohlenstoffhaltigen Abfälle mindestens Graphit und / oder Harze umfassen.

12. Vorrichtung zur Behandlung von kohlenstoffhaltigen radioaktiven Abfällen, **dadurch gekennzeichnet, dass** die Vorrichtung Mittel zur Ausführung des Verfahrens nach einem der vorherigen Ansprüche umfasst.
